# EUROPEAN PATENT APPLICATION

(11) **EP 3 060 011 A1**
(43) Date of publication of application: **24.08.2016**
(21) Application number: 16156077.6
(22) Date of filing: 17.02.2016
(51) Int. Cl.: H04W 52/02, H02M 7/00

(54) **DEVICE AND METHOD FOR REDUCTION IN POWER IN TRANSMISSION SIGNALS**

(30) Priority: 19.02.2015 GB 201502819
(71) Applicant: KATHREIN-Werke KG, 83004 Rosenheim (DE)
(72) Inventor: WECKERLE, Martin, 89077 Ulm (DE); SCHLEE, Johannes, 89077 Ulm (DE); KUTSCHER, Christoph, 89077 Ulm (DE)
(74) Representative: Harrison, Robert John

(57) **Abstract**

A power reduction device (20) for reducing power in a transmission signal (25) received from a mobile telecommunications base station (30) and its use as part of a distributed antenna system (5) is disclosed. The power reduction device (20) comprises a transmission line (40) for transmission of the transmission signal (25), a coupler (70) attached to the transmission line (40) for extraction of at least a small portion of the transmission signal (25') and an energy conversion unit (80) attached to the transmission line (40) for the conversion of a majority portion of the transmission signal (25") to electrical energy.

## Description

### Cross-reference to related applications

This application is related to UK patent applications numbers GB 1414280.6, GB 1414288.9 and GB 1414283.0. The disclosure of the related applications is incorporated herein by reference.

### Field of the invention

The invention relates to a device and a method for reducing power in a transmission signal received from a mobile telecommunications base station.

### Background to the invention

The use of mobile communications networks has increased substantially over the past two decades. Operators of the mobile communications networks have increased the number of base stations in order to meet an increased demand for service by users of the mobile communications networks. The operators of the mobile communications network need to reduce the running costs of the base station as well as improve the coverage of the base station. One option to do this is to implement systems for relaying the telecommunications signals of the mobile communication network as a distributed antenna system (DAS).

The constantly increasing capacity demand in wireless communications and the fact that about 80% of the traffic on the mobile communication system is generated indoors requires new methods to provide flexible signal relaying systems to enable efficient spectrum usage. When indoor traffic is handled with a pure outdoor macro coverage solution, the signal penetration and the signal quality is poor in the indoor environment. Indoor coverage solutions with distributed antenna systems help overcome this issue, but the increasing capacity demand require more advanced indoor solutions beyond pure coverage systems

These indoor DAS have the capability of dynamic traffic and cell switching. The radio frequency (RF) signals in the DAS are digitalised and communicated between a central hub and a plurality of remote units to which antenna elements are connected. The central hub is connected to one or more of the base stations, which can be provided by different network operators. In the indoor DAS, the coverage of a single cell is not necessarily provided by a single one of the remote units. The plurality of the remote units relays the same telecommunication signal of the cell throughout the coverage area of the cell. The total coverage area of the cell is therefore the sum of the individual coverage areas of each ones of the remote units, which are assigned to the cell. In the case of a plurality of antenna elements being connected to one remote unit, the coverage area of the cell is the sum of the individual antenna element coverage areas connected to the remote unit, which is assigned to the cell. Such systems are described, for example in US Patent No. US 7,761,093 (ADC Wireless).

The DAS may be used to provide coverage and capacity inside a building, as well as coverage and capacity in metropolitan or campus areas.

The applicant's co-pending patent applications No. GB 1414280.6, GB 1414288.9 and GB 1414283.0 describe a distributed antenna system in which the remote units and the antenna elements are distributed inside a building. The use of the distributed antenna system in the building means that attenuation of an uplink path between a mobile station, such as a handset or smartphone, is significantly lower than to a macro base station, which is located outside of the building. The DAS enables connection quality to be maintained, even when the user of the mobile station is moving within the building. On the other hand, the lower attenuation in the uplink path can cause high interference levels on the receiver inputs and block the uplink path completely.

Current analogue active indoor distributed antenna systems use conventional base stations with remote (radio) units (also called remote radio heads) that are interconnected through the analogue ports (RF or Radio over Fibre) of the remote units and the base stations. The remote units are typically also connected to antennas. Passive distributed antenna systems known in the art use the relatively high power of the base stations to distribute the signals through splitters and tappers to connected antenna elements for transmission. This is possible because each one of the antenna elements requires only a small amount of RF power for the transmission of the signals. Such prior art systems are often used in large buildings and thus the capacity requirements for the complete distributed antenna system are usually of the same order of magnitude as required for macro cells located outdoors. Thus, the prior art DAS currently installed in large buildings require a level of power for indoor coverage, which can be provided by existing base stations used in the macro cells.

On the other hand, the increasing demand for mobile communications capacity for indoor mobile communications means that more flexible distributed antenna systems are required, which are able to adapt themselves to changes in the capacity requirements within the building without requiring costly changes to the cabling or system infrastructure. Such solutions are known, for example the Kathrein K-bow system, which is a digital and analogue (also called hybrid) distributed antenna system. This hybrid DAS, unlike the passive distributed antenna systems, does not require a higher input signal power from the base station and indeed the components, such as an analog-to-digital converter, used in such digital or hybrid DAS are not able to cope with such high signal input powers. The DAS are therefore provided with an attenuator, which can attenuate the high signal input power (typically in a range of 40-80 Watts) of the signals received from the base station to ensure that the components are not damaged.

In addition to the digital to analog converters, other components used in the DAS system can be at risk from a high input signal power. Examples of such components include optical transceivers that are used, for example in state of the art analog active DAS systems. Such analog active DAS systems are characterized by an amplification of the distributed base station RF signal within the remote units of the DAS system. The analog active DAS systems do not digitize the base station signal for transmission to the remote units along a distribution network. In this case, the analogue signals are converted to light beams and distributed between the base station of the analog active DAS system and the remote units by using optical transceivers along fibre optic cables. It has been found that, a similar degree of attenuation as required for the output signals from the base station of the digital or hybrid DAS system is needed to ensure that the high power RF output signal generated from the base station and passed to a first optical transceiver of the analogue DAS system does not overdrive and damage this first optical transceiver.

Alternatively, it is possible to reduce the output power of the signals generated from the base station. This power reduction would be easy and only requires a small change to one of the configuration parameters of the base stations. However, from the safety point of view, it is necessary that the whole of the DAS can at least tolerate for a short period the high input power. In addition, the network operators generally prefer to power the base stations with a maximum amount of power. The base stations used are base stations for outdoor macro cells, as explained above, and therefore can provide a high output power. There is therefore a danger that even those base stations, which are operating at reduced output power, could erroneously be driven at the higher output power and overload the antennas and other components in the DAS.

The use of attenuators is also not very efficient because the attenuators turn the unwanted electrical power from the attenuated signals into heat. Solutions are known in which this unwanted power could be used, for example, to heat buildings. This requires, however, the construction of additional infrastructure in order to use profitably this generated heat for heating or the production of warm water.

### SUMMARY OF THE INVENTION

The disclosure therefore teaches a distributed antenna system including a power reduction device for reducing power in a transmission signal generated from a base station. The distributed antenna system has at least one front end unit (or central hub) which is connected to at least one base station and receives a transmission signal from one or more of the connected base stations. A plurality of remote radio units is connected through a distribution network to the front end unit and a plurality of antenna elements are connected to the plurality of remote radio units. The power reduction device includes a coupler, attached to the transmission line, which is able to extract at least a small portion of the transmission signal, and an energy conversion unit attached to the transmission line for the conversion of the majority portion of the transmission signal into electrical energy. The power reduction device is therefore able to produce electrical energy from the 'surplus' energy in the transmission signal.

The distributed antenna system is typically a digital or hybrid system and the front end unit of the typically used central hub includes an analog-to-digital converter which can be destroyed if too much power is received on an input port.

In one aspect of the invention, the energy conversion unit can include a rechargeable battery or a rectifier. The energy can also be supplied from the rectifier to a power line or even to the base station or remote units.

A circulator can be attached between the coupler and the energy conversion unit in order to ensure that there are no unwanted reflections back along the transmission line.

The disclosure also teaches a method for reducing power in the transmission signal, which comprises coupling at least a small portion of the transmission signal and forwarding the small portion of the transmission signal to a transmission port of at least one remote radio head. The majority portion of the transmission signal is then forwarded to the energy conversion unit.

The device and method can find application in a distributed antenna system in which a plurality of remote radio heads is connected to one more base stations. The device is used to reduce the amount of power in the transmission signal forwarded to the remote radio heads from the base station.

### Description of the Drawings

Fig. 1A shows a first simplified aspect of a distributed antenna system.
Fig. 1B shows a second aspect of a distributed antenna system.
Fig. 2 shows the device for reducing power of this disclosure
Fig. 3 shows the method for reducing the power in the transmission line

### Detailed description of the invention

The invention will now be described on the basis of the drawings. It will be understood that the embodiments and aspects of the invention described herein are only examples and do not limit the protective scope of the claim in any way. The invention is defined by the claims and their equivalents. It will be understood that features of one aspect or embodiment of the invention can be combined with a feature of a different aspect or aspects and/or embodiment of the invention.

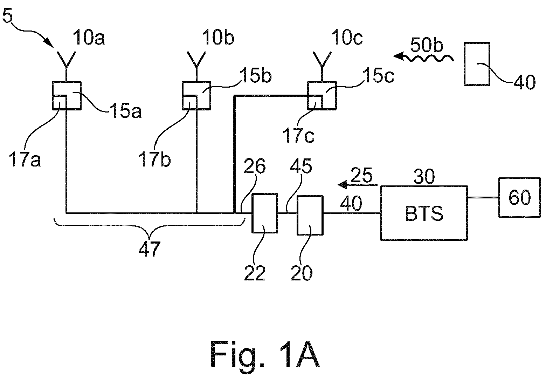

Fig. 1A shows a first aspect of a distributed antenna system 5 incorporating the features of this disclosure. The distributed antenna system 5 has a plurality of antenna elements 10a-c connected to a corresponding remote radio unit 15a-c. The plurality of antenna elements 10a-c is distributed, for example, throughout a building or over a campus or metropolitan area, but this is not limiting of the invention. The transmission signals at the antenna elements 10a-c are received from the remote radio units 15a - c and converted from digital domain to analog domain by digital-to-analog converters 17a-c. The antenna elements 10a-c include an amplifier to amplify the transmission signals.

The remote radio units 15a-c are connected via a distribution network 47 and through a front end unit 22 and a power reduction device 20 to a base station 30. The base station 30 is connected to at least one fixed line network 60 operated by a network operator. It will be appreciated that there may be more than one base station 30 connected to the remote radio units 15a-c and that the base station 30 can be connected to more than one fixed line network 60. The term "base station" 30 is used in this disclosure to encompass not only base transceiver stations, as known in the GSM protocol, but also a Node B known in the UMTS protocol, an eNode B in the LTE protocol, as well as similar units in other wireless protocols. The base station 30 passes transmission signals 25 to the power reduction device 20.

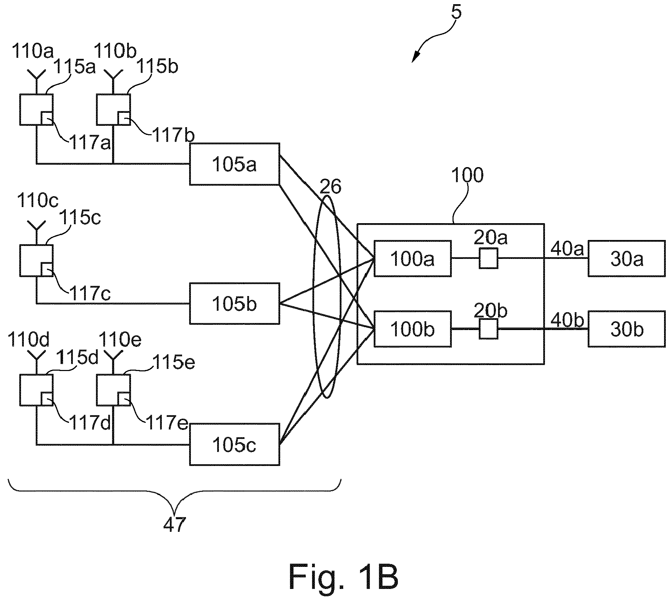

Fig. 1B shows a further aspect of the invention in which two base stations 30a and 30b are connected to a central hub 100 in the distributed antenna system 5. The central hub 100 has a first hub module 100a and a second hub module 100b as well as a first power reduction device 20a and a second power reduction device 20b. Each one of the base stations 30a and 30b is connected to one of the first hub module 100a or the second hub module 100b. As explained in the Applicant's co-pending application, GB 1414280.6, the number of the base stations 30a, 30b and the hub modules 100a, 100b is not limiting of the invention. Similarly, the number of the power reduction devices 20a and 20b is not limiting of the invention.

The central hub 100 is connected to the distribution network 47 having a plurality of expansion units, including coverage area modules, 105a-c. One or more of the remote radio units 115a-e are connected to one or more expansion units 105a-c to which a plurality of the antenna elements 110a-e are assigned. The one or more expansion units 105a-c are adapted to pass the same transmission signals to the connected ones of the remote radio units 115a-e and the corresponding antenna elements 110a-e. The communication of the transmission signals 26 between the central hub 100 and the expansion units 105 a-c is, in one aspect of the invention, in the digital domain and is reconfigurable. A digital to analogue conversion is provided within the expansion units 105a-c and the communication between the expansion units 105a-c and the plurality of antenna elements 110a-e is, in one aspect of the invention, in the analog domain. A plurality of digital to analog converters 117a-e are present in the remote radio units 115a-e to convert the signal received over the distribution network 47 to an analog signal for transmission.

The connection between the central hub 100 and the plurality of expansion units 105 a-c is reconfigurable. The central hub 100 and the expansion units 105a-c enable the signals from the base stations 30a and 30b to be transmitted through the distributed antenna system 5. As described in the applicant's co-pending patent application No. GB1414280.6 the distributed antenna system 5 is highly flexible and allows a reconfiguration of the coverage area.

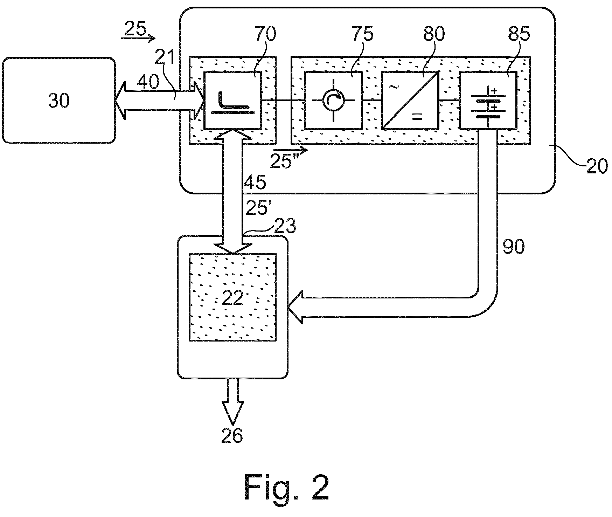

Fig. 2 shows the power reduction device 20, 20a or 20b connected to the transmission line 40 between the base station 30 and the front end unit 22 of the distributed antenna system 5 (as shown in Figs. 1A) or the central hub 100 (as shown in Fig. 1B). The operation of one of the power reduction devices 20, 20a or 20b will now be explained in connection with the simplified embodiment shown in Fig. 1A. It will be appreciated that the power reduction devices 20, 20a, 20b operate in a similar manner.

The power reduction device 20 receives the transmission signals 25 at an analog input port 21 from the base station 30. A coupler 70 is inserted into the transmission line 40 and extracts an RF signal 25' (a small portion) from the transmission signals 25, which is around 30dB less than the strength of original transmission signals 25. The coupler 70 passes this small portion of the transmission signal 25' along line 45 to an analog port 23 of the front end unit 22. The front end unit 22 includes an analog-to-digital converter 27 for converting the received small portion of the transmission signal 25' to a digital signal 26 for distribution through the distributed antenna system 5. The digital signal 26 is passed to remote radio units 15a-c of the distributed antenna system 5 (Fig. 1A) at which point the digital signal 26 is converted by the digital-to-analog converters 17a-c to an RF signal for transmission by the antenna elements 10a-c.

The majority portion of the transmission signal 25", i. e. the remaining part of the received input transmission signal 25, is passed to a circulator 75. The circulator 75 is designed to remove possible reflections and intermodulation products from a rectifier 80 and thus to avoid interferences in the uplink from the transmission signal 25. The circulator 75 would not be required in an ideal world.

The output of the circulator 75 is passed to the rectifier 80, which converts the remaining part of the transmission signal 25" to a DC voltage. The DC voltage is passed, in this aspect of the invention, to a rechargeable battery 85. The rechargeable battery 85 can be connected over a power line 90, for example, to one or more of the remote radio units 15a-c or any other unit or element in the distributed antenna system 5. The power line 90 could be implemented using power-over-coax.

In one further aspect of the invention, the rechargeable battery 85 can be omitted and the output of the rectifier 80 passed directly to one or more of the remote radio units 15a-c or any other unit or element in the distributed antenna system 5. In another aspect of the invention, the rechargeable battery 85 could be used as a back-up battery in the event that the main power to the distributed antenna system 5 is cut.

In another aspect of the invention, the stored electrical power can be used and managed in a central power management unit (not shown), which manages the power supply of the whole distributed antenna system 5.

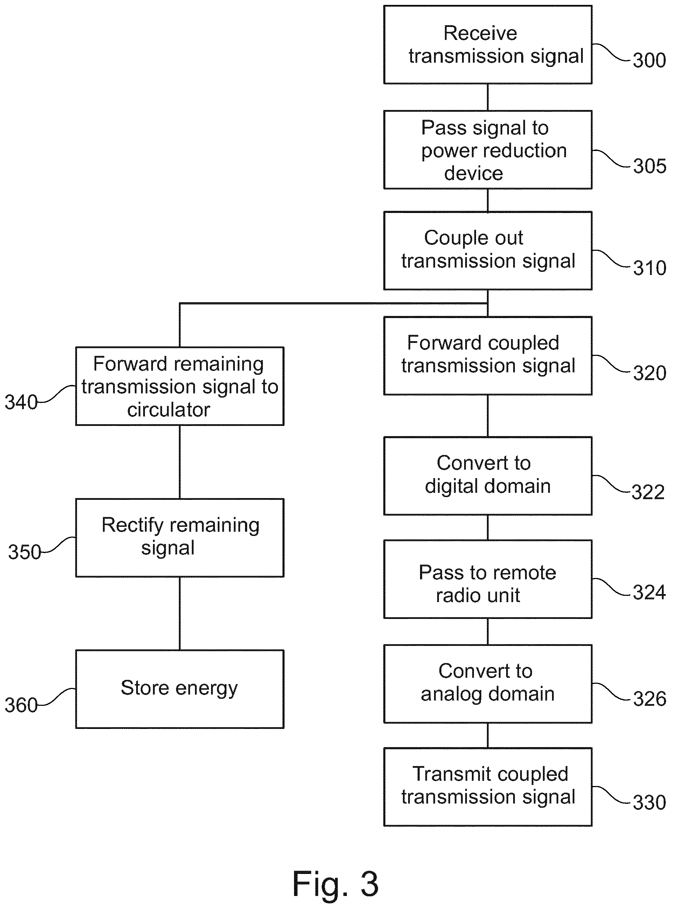

Fig. 3 shows an outline of the method for reducing the power in a transmission signal. In step 300, a radio frequency transmission signal from the base station 30 is received, originating from the fixed line network 60. The base station 30 passes the transmission signal 25 along the transmission line 40 to the analog input port 21 of the power reduction device 20 in step 305. The small portion of the transmission signal 25' is coupled out of the transmission signal 25 in step 310 and is forwarded in step 320 along the line 45 to the front end unit 22 where the small portion of the transmission signal 25' is converted to the digital domain in step 322 and thence passed in step 324 to one or more of the remote radio units 15a-c. The digitized small portion of the transmission signal 25' is converted back from the digital domain to the analog domain in step 326 by the digital to analog converters 17a-c and passed to the antenna elements 10a-10c for transmission in step 330.

The majority part of the transmission signal 25" is forwarded to the circulator 75 in step 340 and then rectified by the rectifier in step 350. If required, in step 360 any excess energy is stored in the battery 85. Alternatively, the energy can be used to power a device, such as any unit in the distributed antenna system 5 or the front end unit 22.

### Reference Numerals

- 5: Distributed antenna system
- 10a-c: Antenna elements
- 15a-c: Remote radio units
- 17a-c: Digital to analog converters
- 20: Power reduction device
- 21: Analog port
- 22: Front end unit
- 23: Analog port
- 25: Transmission signal
- 26: Digital signal
- 27: Analog to digital converter
- 30: Base station
- 40: Transmission line
- 45: Line
- 47: Distribution network
- 60: Fixed line network
- 70: Coupler
- 75: Circulator
- 80: Rectifier
- 85: Rechargeable battery
- 90: Power line

## Claims

1. A distributed antenna system (5) comprising:
at least one front end unit (22, 100) connectable by a transmission line (40) to at least one base station (30, 30a, 30b), wherein the at least one front end unit (22, 100) is adapted to receive a transmission signal (25) from the connected one or ones of the least one base station (30);
a plurality of remote radio units (15a-e) connected through a distribution network (47) to the front end unit (20);
and a plurality of antenna elements (10a-c) connected to the plurality of remote radio units (15a-c);
a power reduction device (20) for reducing power in the transmission signal (25), the power reduction device (20) comprising:
a coupler (70), attached to the transmission line (40), for extraction of at least a small portion of the transmission signal (25');
an energy conversion unit (80) attached to the transmission line (40) for the conversion of a majority portion of the transmission signal (25") to electrical energy.

2. The distributed antenna system (5) according to claim 1, wherein the power reduction device (20) further comprises a circulator (75) attached between the coupler (70) and the energy conversion unit (80).

3. The distributed antenna system (5) according to claim 1 or 2, wherein the power reduction device (20) further comprises a rechargeable battery (85).

4. The distributed antenna system (5) according to any one of the above claims, wherein the energy conversion unit (80) further comprises a rectifier (80).

5. The distributed antenna system (5) according to any one of the above claims, further including a power line (90) to at least a further element in the digital distributed antenna system (5) for supplying power to the further element.

6. The distributed antenna system (5) according to any one of the above claims, wherein the distribution network (47) is a digital network.

7. A power reduction device (20) for reducing power in a transmission signal (25) received from a telecommunications base station (30) comprising:
a transmission line (40) for transmission of the transmission signal (25);
a coupler (70) attached to the transmission line (40) for extraction of at least a small portion of the transmission signal (25');
an energy conversion unit (80) attached to the transmission line (40) for the conversion of a majority portion of the transmission signal (25") to electrical energy.

8. The power reduction device (20) according to claim 7, further comprising a circulator (75) attached between the coupler (70) and the energy conversion unit (80).

9. The power reduction device (20) according to claim 7 or 8, further comprising a rechargeable battery (85).

10. The power reduction device (20) according to any one of claims 7 to 9, wherein the energy conversion unit (80) further comprising a rectifier (80).

11. The power reduction device (20) according to any one of claims 7 to 10, further including a power line (90) connectable to at least one element in a digital distributed antenna system (5).

12. The power reduction device (20) according to any one of claims 7 to 11, further connected to an analog-to-digital converter (27).

13. A method for reducing power in a transmission signal (25) for relaying by a distributed antenna system (5) comprising:
coupling (310) at least a small part of the transmission signal (25') and forwarding (320) the small part of the transmission signal (25') to a front end unit (5);
forwarding (340) the majority part of the transmission signal (25") to an energy conversion unit (80).

14. The method of claim 13, further comprising rectifying (350) the majority part of the transmission signal (25").

15. The method of claim 13 or 14, further comprising powering (360) at least one device in the distributed antenna system (5) using electrical energy extracted from the majority part of the transmission signal (25").

16. The method of any one of claims 13 to 15, further comprising digitising the small part of the transmission signal (25').

17. The method of any one of claims 13 to 16, further comprising charging (360) a rechargeable battery (85).
